# EUROPEAN PATENT APPLICATION

(11) **EP 4 711 048 A1**
(43) Date of publication of application: **18.03.2026**
(21) Application number: 25180767.3
(22) Date of filing: 04.06.2025
(51) Int. Cl.: B05C 5/02, B05C 9/06, H01M 4/139

(54) **APPARATUS AND METHOD FOR COATING ELECTRODE PLATE OF SECONDARY BATTERY, AND SLOT DIE USED IN THE APPARATUS AND THE METHOD**

(30) Priority: 11.09.2024 KR 20240124339
(71) Applicant: SAMSUNG SDI CO., LTD., Yongin-si, Gyeonggi-do 17084 (KR)
(72) Inventor: PARK, Jeongyi, 17084 Yongin-si, Gyeonggi-do (KR); PARK, Hyemin, 17084 Yongin-si, Gyeonggi-do (KR); LEE, Giwook, 17084 Yongin-si, Gyeonggi-do (KR); JUNG, Mingyu, 17084 Yongin-si, Gyeonggi-do (KR); LEE, Junghyun, 17084 Yongin-si, Gyeonggi-do (KR)
(74) Representative: Gulde & Partner

(57) **Abstract**

The present disclosure relates to an apparatus and method for manufacturing an electrode plate of a secondary battery. In an embodiment a slot die that simultaneously discharges a mixture slurry and an insulating slurry. The slot die includes an insulating slurry discharge portion protruding toward a substrate more than a mixture slurry discharge portion, which enables fine adjust of a thickness of the insulation coated portion on the substrate.

## Description

### BACKGROUND

### 1. Field of the Disclosure

The present disclosure relates to an apparatus and method for manufacturing an electrode plate of a secondary battery.

### 2. Discussion of Related Art

Unlike primary batteries that cannot be charged, secondary batteries can be charged and discharged. In general, a secondary battery includes an electrode assembly comprising positive and negative electrode plates and a separator.

The positive and negative electrode plates can be manufactured using a coating process of coating one surface or both surfaces of an electrode substrate with a mixture of an electrode material, a roll pressing process of pressing and stretching the electrode plate coated with the mixture to make the electrode plate thin and flat, a slitting process of cutting the coated electrode plate in multiple rows in a longitudinal direction to be separated into individual electrode plates, and a notching process of cutting each separated electrode plate in a transverse direction, removing unnecessary portions, and forming tabs.

In the coating process, the substrate is coated with a slurry-state mixture using a slot die. The coated substrate includes a coated portion and an uncoated portion that is not coated. Recently, the method of coating an edge of the coated portion with an insulating material to block a positive electrode from being in direct contact with a negative electrode has been used to prevent short circuits between the positive electrode and negative electrode plates.

Due to different physical properties of the coated portion and an insulation coated portion formed at the edge of the mixture coated portion, there may be a problem of waves being formed in the electrode plate during the coating process and also during subsequent processes according to the thickness of the insulation coated portion.

The information disclosed in this section is for enhancement of understanding of the background of the present disclosure and may contain information that does not constitute a related (or prior) art.

### SUMMARY OF THE DISCLOSURE

The present disclosure is directed to a coating apparatus and method for finely adjusting the thickness of an insulation coated portion that is formed on a mixture coated portion, and a slot die used to form the coating.

The present disclosure provides an integrated slot die that simultaneously discharges a mixture slurry and an insulating slurry. In addition, an insulating slurry discharge portion protrudes toward a coating roller or a substrate more than a mixture slurry discharge portion to enable fine adjustment of the thickness of the insulation coated portion formed on the substrate.

According to one aspect of the present disclosure, there is provided an apparatus for coating an electrode plate of a secondary battery, which includes a coating unit configured to simultaneously provide a mixture coating and insulation coating to an electrode substrate of a secondary battery, the coating unit including a slot die having a mixture slurry discharge portion and an insulating slurry discharge portion, wherein the apparatus is configured such that a distance between the insulating slurry discharge portion and the electrode substrate is less than a distance between the mixture slurry discharge portion and the electrode substrate.

The distance between the insulating slurry discharge portion and the electrode substrate may be changeable.

The distance between the insulating slurry discharge portion and an electrode substrate of a secondary battery may be adjusted based on a thickness of an insulation coated portion formed on the electrode substrate.

The distance between the insulating slurry discharge portion and an electrode substrate of a secondary battery may be inversely proportional to a thickness of an insulation coated portion formed on the electrode substrate.

The integrated slot die may comprise: an upper plate comprising a mixture slurry supply portion and an insulating slurry supply portion; a lower plate comprising a cavity configured to collect a mixture slurry supplied to the mixture slurry supply portion; and a spacer positioned between the upper plate and the lower plate to form the mixture slurry discharge portion and the insulating slurry discharge portion.

The spacer may comprise a protrusion (231) that forms the insulating slurry discharge portion (233).

The protrusion may protrude up to 80 µm from the mixture slurry discharge portion.

The spacer may comprise a protrusion amount change portion configured to adjust a distance the protrusion protrudes from the mixture slurry discharge portion.

According to another aspect of the present disclosure, there is provided a method of coating an electrode plate of a secondary battery, which includes simultaneously providing a mixture coating and an insulation coating to an electrode substrate of a secondary battery using an integrated slot die having a mixture slurry discharge portion and an insulating slurry discharge portion, wherein a distance from the insulating slurry discharge portion to the electrode substrate is less than a distance from the mixture slurry discharge portion to the electrode substrate.

The distance between the insulating slurry discharge portion and the electrode substrate may be based on a thickness of an insulation coated portion formed on the electrode substrate.

The distance between the insulating slurry discharge portion and the electrode substrate may be inversely proportional to a thickness of an insulation coated portion on the electrode substrate.

According to another aspect of the present disclosure, a system including a secondary battery and an apparatus for coating an electrode plate of the secondary battery is provided. The system may include features defined in paragraphs [0009] to [0019].

According to still another aspect of the present disclosure, there is provided a slot die for coating an electrode plate of a secondary battery, which includes an upper plate including a mixture slurry supply portion and an insulating slurry supply portion, a lower plate including a cavity configured to collect a mixture slurry supplied to the mixture slurry supply portion, and a spacer positioned between the upper plate and the lower plate to form a mixture slurry discharge portion and an insulating slurry discharge portion, wherein the slot die is configured such that a distance between the insulating slurry discharge portion and an electrode substrate is less than a distance between the mixture slurry discharge portion and the electrode substrate.

The distance between the insulating slurry discharge portion and an electrode substrate of a secondary battery may be changeable.

The distance between the insulating slurry discharge portion and an electrode substrate of a secondary battery may depend on a thickness of an insulation coated portion formed on the electrode substrate.

The spacer may comprise a protrusion that forms the insulating slurry discharge portion.

The slot die may be used for an apparatus for coating an electrode plate of a secondary battery.

According to another aspect of the present disclosure, a system including a secondary battery and a slot die is provided. The system may include features defined in paragraphs [0021] to [0025].

Aspects and features of the present disclosure are not limited to those described above, and other aspects and features not specifically mentioned herein will be clearly understood by those skilled in the art from the description below.

### BRIEF DESCRIPTION OF THE DRAWINGS

The above and other objects, features and advantages of the present invention will become more apparent to those of ordinary skill in the art by describing exemplary embodiments in detail with reference to the accompanying drawings, in which:
FIG. 1 schematically shows an electrode assembly of a secondary battery;
FIG. 2 schematically shows a pouch-type secondary battery;
FIG. 3 is a cross-sectional view of a cylindrical secondary battery;
FIG. 4 is a diagram of an internal configuration of a prismatic secondary battery;
FIG. 5 shows a process of manufacturing an electrode plate of the electrode assembly shown in FIG. 1;
FIG. 6 shows a substrate coated with a mixture layer and an insulating layer by a coating unit;
FIG. 7 is a schematic view of an integrated slot die according to embodiments of the present disclosure;
FIG. 8 is an exploded view of the integrated slot die according to embodiments of the present disclosure;
FIG. 9 is a top view of an integrated slot die;
FIG. 10 is a cross-sectional view along line A-A' in FIG. 9;
FIG. 11 is a configuration view of a spacer according to embodiments of the present disclosure;
FIG. 12 is an exemplary view of a secondary battery module with secondary batteries that can be manufactured according to the present disclosure;
FIG. 13 is an exemplary view of a secondary battery pack including the secondary battery module of FIG. 12; and
FIG. 14 is a conceptual diagram of a vehicle including the secondary battery pack of FIG. 13.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Numerical ranges disclosed and/or recited herein include all sub-ranges of the same numerical precision subsumed within the recited range. For example, a range of "1.0 to 10.0" includes all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein, and any minimum numerical limitation recited in this specification includes all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an element "above (or below)" or "on (under)" another element may mean that the element may contact the upper (or lower) surface of the element, and another element may also be interposed between the element and the element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

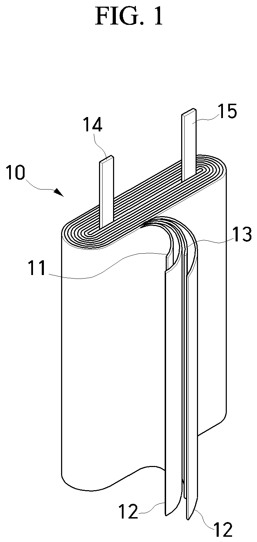

FIG. 1 schematically shows an electrode assembly of a secondary battery.

Referring to FIG. 1, an electrode assembly 10 may be formed by winding or stacking a stack of a first electrode plate 11, a separator 12, and a second electrode plate 13, each of which is formed as a thin plate or film. When the electrode assembly 10 is a wound stack, a winding axis may be parallel to the longitudinal direction of a case of the secondary battery. In addition, the electrode assembly 10 may be a Z-stack electrode assembly in which a positive electrode plate and a negative electrode plate are provided to both sides (e.g., opposite sides) of a separator, which is then bent (or folded) into a Z-stack. In addition, one or more electrode assemblies may be stacked (e.g., arranged) such that long sides of the electrode assemblies are adjacent to each other and accommodated in a case. The number of electrode assemblies in a case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region where the first electrode active material is not provided. The first electrode tab 14 may be connected to an external first terminal. In some embodiments, when the first electrode plate 11 is made, the first electrode tab 14 may be formed by cutting so as to protrude from one side of the electrode assembly 10. In other embodiments, the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminum or an aluminum alloy. The second electrode plate 13 may include a second electrode tab 15 (e.g., a second uncoated portion), which is a region where the second electrode active material is not provided. The second electrode tab 15 may be connected to an external second terminal. In some embodiments, the second electrode tab 15 may be formed by cutting to protrude to the other side (e.g., the opposite side) of the electrode assembly 10 when the second electrode plate 13 is made. In other embodiments, the second electrode plate 13 may protrude to the other side of the electrode assembly more than (e.g., farther than or beyond) the separator 12 without being separately cut.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

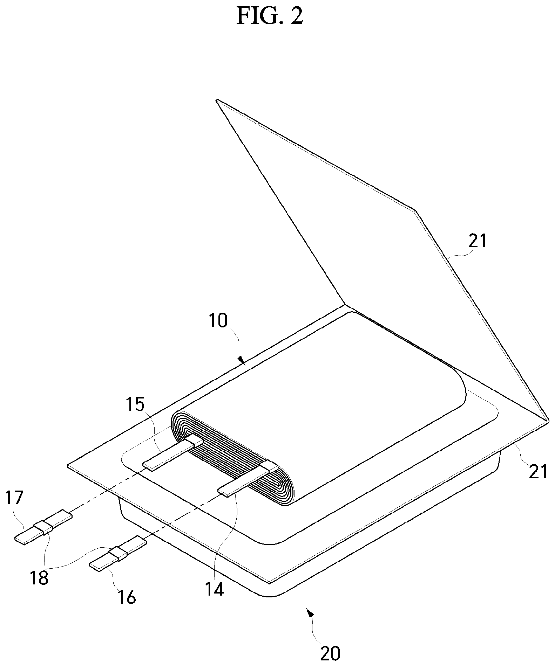

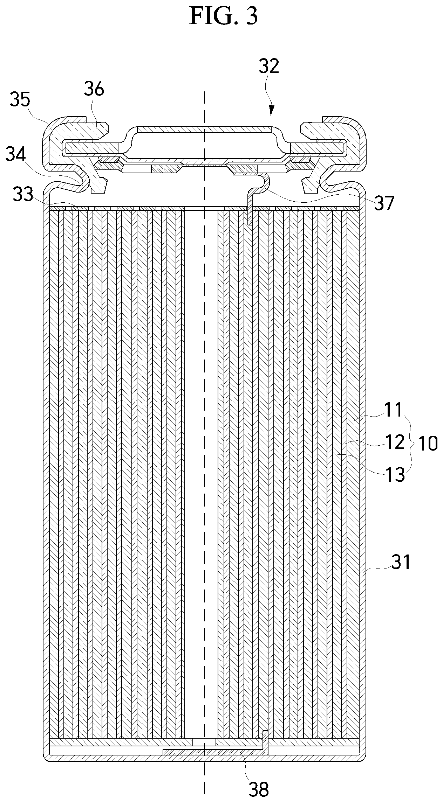

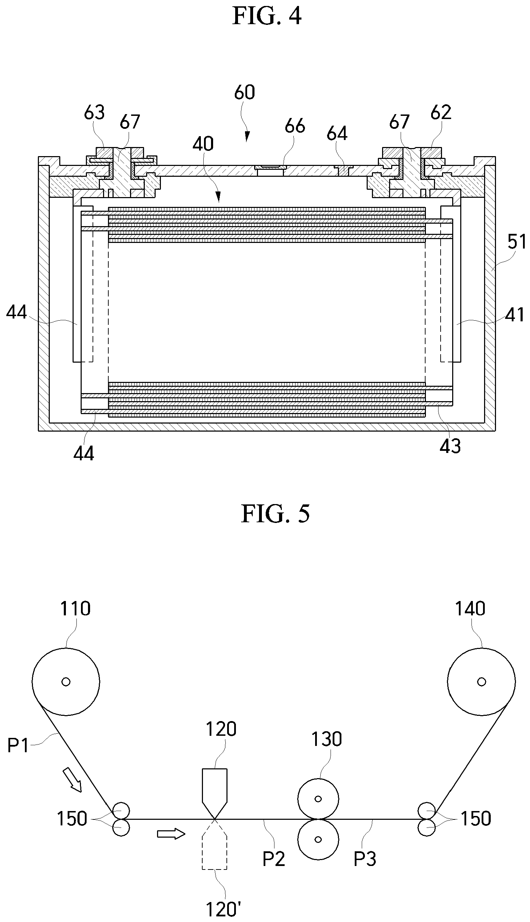

In some embodiments, the electrode assembly 10 may be accommodated in a case along with an electrolyte. In a pouch-type secondary battery, an electrode assembly 10 may be accommodated in a pouch made of flexible material (see FIG. 2). In a cylindrical or prismatic secondary battery, an electrode assembly 10 may be accommodated in a cylindrical or prismatic metal casing (see FIGS. 3 and 4).

Hereinafter, suitable materials that may be use for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof. As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8). In these formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The amount of the positive electrode active material may be in a range of about 90 wt% to about 99.5 wt% based on 100 wt% of the positive electrode active material layer. The amount of the binder and the conductive material may be in a range of about 0.5 wt% to about 5 wt%, respectively, based on 100 wt% of the positive electrode active material layer.

The substrate may be aluminum (Al), but the present disclosure is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon include graphite, such as natural graphite or artificial graphite, and examples of the amorphous carbon include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to an embodiment, the silicon-carbon composite may be in the form of silicon particles and amorphous carbon is coated on the surfaces of the silicon particles.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

The negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one of a copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt. The non-aqueous organic solvent acts as a medium through which ions involved in the electrochemical reaction of the battery can move. The non-aqueous organic solvent may be a carbonate-based, an ester-based, an ether-based, a ketone-based, an alcohol-based solvent, an aprotic solvent, and may be used alone or in combination of two or more. **In** addition, when a carbonate-based solvent is used, a mixture of cyclic carbonate and chain carbonate may be used.

Depending on the type of lithium secondary battery, a separator may be provided between the first electrode plate (e.g., the negative electrode) and the second electrode plate (e.g., the positive electrode). The separator may be formed from polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate. The organic material may include a polyvinylidene fluoride-based polymer or a (meth)acrylic polymer. The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof. But the present disclosure is not limited to these examples. The organic material and the inorganic material may be mixed in one coating layer or may be in the form of a coating layer including an organic material and a coating layer including an inorganic material that are stacked on each other.

FIG. 2 schematically shows a pouch-type secondary battery. The pouch-type secondary battery includes an electrode assembly 10 and a pouch 20 that accommodates the electrode assembly 10.

The electrode assembly 10 is the same as the electrode assembly 10 illustrated in FIG. 1. The first electrode tab 14 and the second electrode tab 15 of the electrode assembly 10 may be electrically connected to respective external first and second terminal leads 16 and 17 by welding. Each of the first terminal lead 16 and the second terminal lead 17 may be attached with a tab film 18 for insulation from the pouch 20.

The pouch 20 may be sealed by having sealing parts 21 at the edges thereof contact each other while the electrode assembly 10 in the pouch 20. The sealing may be achieved with the tab film 18 interposed between the sealing parts 21. The sealing parts 21 of the pouch 20 may each be made of a thermal fusion material that has weak adhesion to metal. Thus, the pouch 20 may be fused by interposing the thin tab film 18 between the sealing parts 21.

FIG. 3 is a cross-sectional view of a cylindrical secondary battery. As shown in FIG. 3, a secondary battery may include an electrode assembly 10, a case 31 accommodating the electrode assembly 10 and an electrolyte therein. A cap assembly 32 may be coupled to an opening of the case 31 to seal the case 31. An insulating plate 33 may be positioned between the electrode assembly 10 and the cap assembly 32 inside the case 31.

The case 31 accommodates the electrode assembly 10 and the electrolyte, and, together with the cap assembly 31, forms the external appearance of the secondary battery. The case 31 may have a substantially cylindrical body portion 12 and a bottom portion connected to one side of the body portion. A beading part 34 (e.g., a bead) deformed inwardly may be formed in the body portion. A crimping part 35 (e.g., a crimp) bent inwardly may be formed at an open end of the body portion.

The beading part 34 can reduce or prevent movement of the electrode assembly 10 inside the case 31 and can facilitate seating of the gasket and the cap assembly 31. The crimping part 35 may firmly fix the cap assembly 32 by pressing the edge of the case 31 against the gasket 36. The case 31 may be formed, for example, of iron plated with nickel.

The cap assembly 32 may be fixed to the inside of the crimping part 35 by a gasket 36 to seal the case 31. A first lead tab 37 extending from the electrode assembly 10 may be connected to the cap assembly 32. A second lead tab 38 extending from the electrode assembly 10 may be electrically connected to the bottom of the casing 31.

FIG. 4 is a diagram of a prismatic secondary battery. As shown, a prismatic secondary battery may include an electrode assembly 40, a first current collector 41, a first terminal 62, a second current collector 42, a second terminal 63, a case 51, and a cap assembly 60.

An electrode assembly 40 may be formed by winding or stacking a first electrode plate, a separator, and a second electrode plate, which each are formed as a thin plate or film. When the electrode assembly 40 is a wound stack, a winding axis may be parallel to the longitudinal direction (e.g., the y direction) of the case 51. In other embodiments, the electrode assembly 40 is a stack type rather than a winding type. The shape of the electrode assembly 40 is not limited in the present disclosure. In addition, the electrode assembly 40 may be a Z-stack electrode assembly in which a positive electrode plate and a negative electrode plate are provided to sides of a separator, which is then bent into a Z-stack. In addition, one or more electrode assemblies may be stacked such that long sides of the electrode assemblies are adjacent to each other and accommodated in the case. The number of electrode assemblies in the case is not limited in the present disclosure. The first electrode plate of the electrode assembly may act as a negative electrode, and the second electrode plate may act as a positive electrode. Of course, the reverse is also possible.
The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion), which is a region to which the first electrode active material is not provided. The first electrode tab 43 may act as a current flow path between the first electrode plate and the first current collector 41. **In** some embodiments, when the first electrode plate is made, the first electrode tab 43 is formed by cutting so as to protrude to one side of the electrode assembly 40. **In** other embodiments, the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion), which is a region where the second electrode active material is not provided. The second electrode tab 44 may act as a current flow path between the second electrode plate and the second current collector 42. **In** some embodiments, the second electrode tab 44 may be formed by cutting so as to protrude to the other side (e.g., the opposite side) of the electrode assembly when the second electrode plate is made. **In** other embodiments, the second electrode plate may protrude to the other side of the electrode assembly more than (e.g., farther than or beyond) the separator without being separately cut.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 40 is accommodated in the case 10 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. In embodiments where the first electrode tab 43 and the second electrode tab 44 are located at the top of the electrode assembly 40, the first and second current collectors are located at the top of the electrode assembly 40.

As illustrated in FIG. 4, the first current collector 41 and the second current collector 42 are connected to the first terminal 62 and the second terminal 63 through connection members 67, respectively. In embodiments, the connection members 67 may each have an outer peripheral surface that is threaded and may be fastened to the first terminal 62 and the second terminal 63 by screwing. But the present disclosure is not limited thereto. For example, the connection members 67 may also be coupled to the first terminal 62 and the second terminal 63 by riveting or welding.

FIG. 5 is a schematic diagram of a process for manufacturing the electrode plate (i.e., the first electrode plate 11 or the second electrode plate 13) of the electrode assembly 10 illustrated in FIG. 1.

A supply roll 110 is provided on which a substrate P1 for an electrode plate is wound. When an apparatus for manufacturing electrode plates according to the present disclosure is used to manufacture a positive electrode plate, the substrate P1 may be, for example, a metal foil containing aluminum (Al). Alternatively, when the apparatus is used to manufacture a negative electrode plate, the substrate P1 may be, for example, a metal foil containing copper (Cu) or nickel (Ni).

A transfer roller 150 is provided as an idle roller that guides the substrate P1 unwounded from the supply roll 110 or as a drive roller that applies a pulling force to unwind the substrate P1 from the supply roll 110. FIG. 5 illustrates a total of four transfer rollers 150 as an example, but the number and positions of transfer rollers may be different from the depicted configuration.

A coating unit 120 forms a coating layer by coating the substrate P1 with an electrode material slurry. Here, the coating compound includes an active material. For example, when the electrode plate manufacturing device is used to manufacture a positive electrode plate, the coating compound may include an active material including a lithium transition metal oxide, a binder, and a volatile solvent. When manufacturing a negative electrode plate, a compound may also be prepared with an active material, a binder, and a solvent. It is possible to simultaneously coat both the upper and lower surfaces of the substrate P1 by adding a second coating unit 120'. The second coating unit 120' may have the same configuration as the coating unit 120 illustrated in FIG. 5 and be configured to apply a coating to the lower surface of the substrate P1.

A press unit 130, i.e., a rolling unit, uses a roller to compresses a substrate P2 coated with the mixture (mixture of the electrode material) applied by the coating unit 120 . Such a process enables the production of high-capacity and high-density secondary batteries.

A winding roll 140 winds and accommodates an electrode plate P3 coated and rolled by the coating unit 120 and the press unit 130.

FIG. 5 shows the coating unit 120 and the press unit 130 used in one process. But this is only an example, and the coating process and the rolling process may be performed separately.

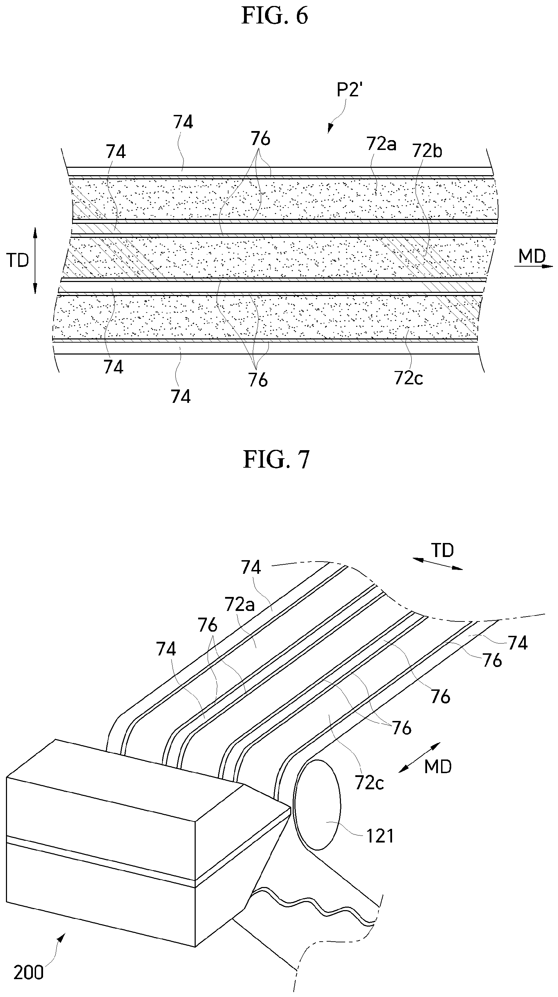

FIG. 6 is a top view of the substrate P2 coated with the mixture by the coating unit 120 of FIG. 5. The coated substrate P2 has a coated portion 72 where the substrate is coated with the mixture and an uncoated portion (uncoated portion) 74 in which the substrate is not coated.

For reference, hereinafter, a width direction of the electrode plate is referred to as a transverse direction TD and a longitudinal direction that is a moving direction of the electrode plate is referred to as a machine direction MD.

FIG. 6 shows a multi-row coating substrate P2' having coated portions formed in multiple rows in the machine direction MD of the substrate. The coated portions are formed using a multi-row slot die that simultaneously provides the coating material for coating regions in the transverse direction TD of the substrate and shows an example in which a first-row coated portion 72a, a second-row coated portion 72b, and a third-row coated portion 72c, with uncoated portion 74 forming boundaries in the transverse direction TD. The uncoated portions 74 include an outermost portion of the multi-row coated electrode plate.

A method of coating an edge of the mixture coated portion with an insulating material to block a positive electrode from contacting a negative electrode has been used to prevent a short circuit. FIG. 6 shows an insulation coated portion 76 formed at edges of the first-row coated portion 72a, the second-row coated portion 72b, and the third-row coated portion 72c in the longitudinal direction.

FIG. 6 shows three rows of coated portions. But this is only one example, and different numbers of rows of coated portions may be formed.

To manufacture the electrode plate of FIG. 6, a mixture coating slot die for discharging a mixture slurry to form a mixture coated portion and an insulation coating slot die for discharging an insulating slurry to form an insulation coated portion may be used.

FIG. 7 is a schematic view of an integrated slot die for simultaneously discharging a mixture slurry and an insulating slurry according to embodiments of the present disclosure. FIG. 7 shows an integrated slot die 200 for forming three rows (three lanes) of mixture coated portions in the example shown in FIG. 6.

While the substrate is transported in the machine direction MD by the roller 121, three rows of mixture coated portions 72a, 72b, and 72c are formed by the mixture slurry and the insulating slurry that are discharged from the integrated slot die 200. An insulation coated portion 76 may be formed at each edge of the mixture coated portion.

The thickness of the insulation coated portion 76 may be important. In some cases, there waves may be formed in the electrode plate that occur during the coating process and also during subsequent processes according to the thickness of the insulation coated portion 76 due to different physical properties of the mixture and insulating material. The waves are undesirable, and to prevent such waves, the amount of a discharged insulating slurry and the amount of a discharged mixture slurry need to be controlled in the integrated slot die 200.

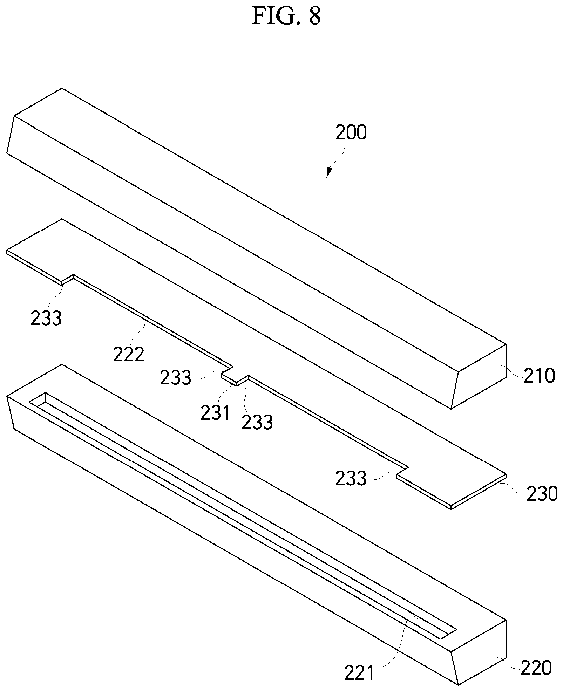

FIG. 8 is an exploded view of the integrated slot die 200 according to embodiments of the present disclosure.

The integrated slot die 200 may include an upper plate 210, a lower plate 220 including a cavity 221 in which a mixture slurry is collected, and a spacer 230 positioned between the upper plate 210 and the lower plate 220. The integrated slot die 200 may also include a mixture slurry discharge portion 222 for discharging a mixture slurry and an insulating slurry discharge portion 233 for discharging an insulating slurry.

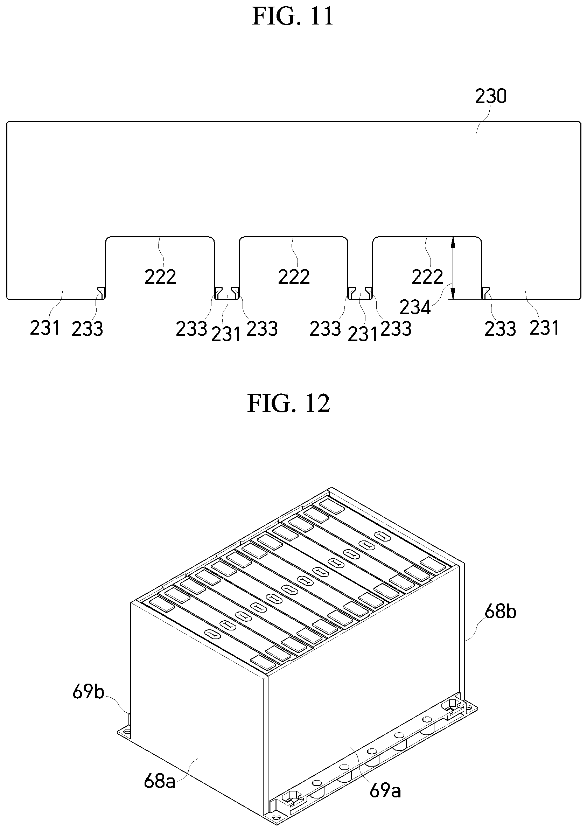

In FIG. 8, an edge of an end of a protrusion 231 forms the insulating slurry discharge portion 233, and FIG. 11 shows a more detailed configuration. Therefore, the insulation coated portion may be formed at both edges of the mixture coated portion.

A structure of the insulating slurry discharge portion 233, which protrudes more than the mixture slurry discharge portion 222 by the protrusion 231, is configured to control the thickness of the insulation coated portion 76 by making a distance between the insulating slurry discharge portion 233 and the substrate less than a distance between the mixture slurry discharge portion 223 and the substrate. That is, as the insulating slurry discharge portion 233 of the spacer 230 protrudes to a position that is closer to the substrate to thereby reduce the distance to the substrate, the thickness of the insulation coated portion 76 may be controlled.

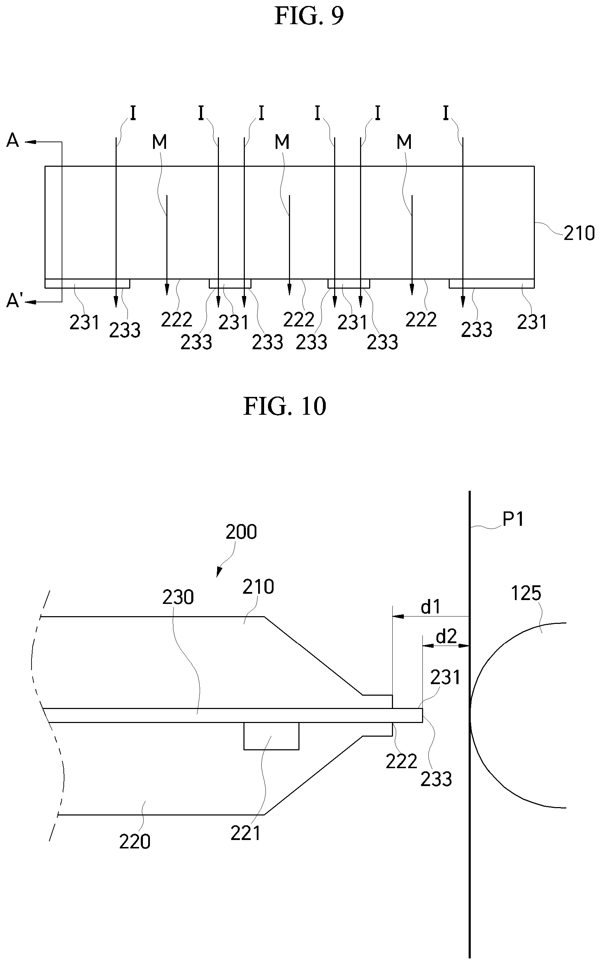

FIG. 9 is a top view of the integrated slot die 200 and schematically shows flows of an insulating slurry I and a mixture slurry M.

In the top view of the upper plate 210, the protrusion 231 of the spacer 230 may be positioned between mixture slurry discharge portions 222, and the insulating slurry I may be discharged from both edges of the protrusion 231.

FIG. 10 is a cross-sectional view along line A-A' in FIG. 9. As described above, a distance d2 between the insulating slurry discharge portion 233 and the electrode substrate P1 may be less than a distance d1 between the mixture slurry discharge portion 222 of the integrated slot die 200 and the electrode substrate P1. To this end, the protrusion 231 may be formed as shown in FIGS. 8 and 9.

Typically, when a spacer is fastened to the upper and lower plates of the slot die, the spacer is designed to be fastened to die lips of the upper and lower plates. In the present disclosure, the insulating slurry discharge portion 233, which is a part of the spacer 230, protrudes more than the mixture slurry discharge portion 222. Therefore, the thickness of the insulation coated portion 76 can be finely adjusted.

As the insulating slurry discharge portion 233 protrudes to form the insulation coated portion 76, the gap between the mixture slurry discharge portion 222 and the substrate P1 may be greater as shown in FIG. 10, which could reduce the straightness of the mixture slurry during coating and causing waves in the substrate. However, with the integrated slot die 200 for mixture-insulation coating according to the present disclosure, the mixture slurry and the insulating slurry may be discharged together, which has the effect of supplementing the straightness of the mixture slurry. For example, the insulating slurry may overlap the mixture slurry during coating. In this way, since the integrated slot die for coating of the insulating layer-mixture layer according to the present disclosure can supplement the straightness of the mixture slurry by the insulating slurry, the spacer 230 can be designed to further protrude compared to as involving only mixture coating.

The table below shows the results experiments relating thickness of the insulation coated portion 76 and a coating state to the protrusion amount of the protrusion 231, i.e., the length that the protrusion protrudes from the mixture slurry discharge portion 222.

| Protrusion amount (µm) | Insulation coating thickness (µm) | Description | Experimental result |
|---|---|---|---|
| -10 to 0 | -- | Contamination of mixture slurry | Not Good |
| 0 to 30 | 35 to 45 | Wave occurs, but process progress is possible | OK |
| 30 to 50 | 20 to 35 | Good | OK |
| 50 to 80 | 15 to 20 | Good | OK |
| 80 to 110 | 5 to 15 | Gap is too great and thus straightness of mixture slurry is lowered | Not Good |

In the experiments, a negative protrusion amount indicates that the insulating slurry discharge portion 233 is position further from the electrode than the mixture slurry discharge portion 222. As shown in the Table, when the protrusion amount of the protrusion 231 is zero or less, the mixture slurry and the insulating slurry are mixed, resulting in a problem of contaminating the mixture slurry. Therefore, the protrusion 231 may protrude so that the insulating slurry discharge portion is positioned closer to the substrate than the mixture slurry discharge portion, which results in an appropriate mixture coated portion and insulation coated portion.

More specifically, when the protrusion 231 protrudes less than 0 to 30 µm, waves occurred in the substrate, but it was still included in the specifications for which the coating process may proceed. When the protrusion 231 protruded 30 to 80 µm, good coating results were obtained. Therefore, it was found that to simultaneously form the mixture coated portion and the insulation coated portion, the protrusion amount of the protrusion 231 may be 0 to 80 µm. When the protrusion 231 protruded 80 µm or more, the gap (see FIG. 10) between the mixture slurry discharge portion 222 and the substrate P1 was too great. Thus, the mixture slurry was coated in a less straight row, making it difficult to proceed with the process.

In the above Table, it can also be seen that the protrusion amount of the protrusion 231, which corresponds to the distance between the insulating slurry discharge portion 233 and the electrode substrate P1, depends on the thickness of the insulation coated portion. Specifically, the protrusion amount is inversely proportional to the thickness of the insulation coated portion. The thickness of the insulation coated portion 76 can be change with consideration of factors affecting the process progress, such as waves occurring in the substrate, and the stability of cells.

FIG. 11 is a configuration view of the spacer 230 according to embodiments of the present disclosure. As shown in FIG. 8, the protrusion 231 may be provided between the mixture slurry discharge portions 222, and the insulating slurry discharge portion 233 may be provided at both edges of the protrusion 231. To discharge the insulating slurry according to such a method, an insulating slurry flow path (not shown) through which the supplied insulating slurry is discharged may be formed at an edge of the insulating slurry discharge portion 233.

The protrusion amount of the protrusion 231 may be adjusted by changing a distance between the mixture slurry discharge portion 222 and the insulating slurry discharge portion 233, that is, changing the protrusion length 234. I embodiments, a plurality of spacers 230 having different protrusion amounts of the protrusion 231 (that is, the protrusion length 234) are made. Thus, an appropriate spacer 230 may be selected and used depending on the type of a substrate to be coated, a desired thickness of the insulation coated portion, and any other coating factor. In another embodiment, a protrusion amount change portion of the protrusion 231 may be added to the spacer 230 to change the protrusion length 234. For example, the protrusion amount change portion may be implemented as a mechanism that changes the position of the protrusion 231 when the mixture slurry discharge portion 222 of the spacer 230 is coupled to a separately manufactured protrusion 231 using a screw.

FIG. 12 is an exemplary view of a secondary battery module including secondary batteries manufactured according to the manufacturing apparatus and method of the present disclosure. With the high capacity of secondary batteries for driving electric vehicles or the like, a secondary battery module is made by arranging and connecting a plurality of secondary battery cells in a transverse direction and/or a longitudinal direction. The plurality of secondary batteries may be arranged in a space defined by a pair of facing end plates 68a and 68b and a pair of facing side plates 69a and 69b. The arrangement of the secondary battery may be designed to have an arrangement direction and number to obtain desired voltage and current specifications.

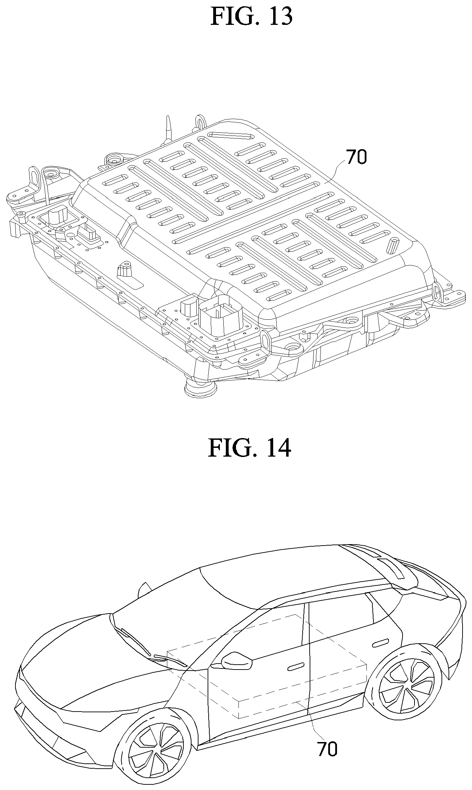

FIG. 13 is an exemplary view of a secondary battery pack 70 formed to apply the secondary battery module shown in FIG. 12 to an actual product (e.g., a vehicle). A secondary battery pack can be manufactured by embedding a plurality of secondary battery modules in a pack housing designed to be mounted on an actual product. The pack housing can include fastening parts and electrical outlets necessary for mounting on a product. In FIG. 13, components including a bus bar, a cooling unit, external terminals for electrically connecting batteries, etc., are not shown.

The secondary battery pack may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle, but the present disclosure is not limited thereto. FIG. 13 shows a vehicle that includes the battery pack 70 shown in FIG. 12 on the lower body thereof. The vehicle V may operate by (e.g., may be powered by) receiving power from the battery pack 70.

The vehicle V may operate by (e.g., may be powered by) receiving power from the battery pack 70.

According to the present disclosure, by reducing a gap between a substrate and a spacer protruding from an integrated slot die that simultaneously discharges a mixture slurry and an insulating slurry, it is possible to adjust the thickness of an insulation coated portion, thereby preventing or reducing problems such as waves according in the thickness of the insulation coated portion.

Although the present disclosure has been described above with respect to embodiments thereof, the present disclosure is not limited thereto. Various modifications and variations can be made thereto by those skilled in the art within the present disclosure.

## Claims

1. An apparatus for coating an electrode plate of a secondary battery, the apparatus comprising:
a coating unit (120) configured to simultaneously provide a mixture coating and insulation coating to an electrode substrate for a secondary battery, the coating unit (120) including a slot die having a mixture slurry discharge portion (222, 223) and an insulating slurry discharge portion (233),
wherein the apparatus is configured such that a distance between the insulating slurry discharge portion (233) and an electrode substrate of a secondary battery is less than a distance between the mixture slurry discharge portion (222, 223) and the electrode substrate.

2. The apparatus as claimed in claim 1, wherein the apparatus is configured such that the distance between the insulating slurry discharge portion (233) and the electrode substrate is changeable.

3. The apparatus as claimed in claim 1 or 2, wherein the apparatus is configured such that the distance between the insulating slurry discharge portion (233) and an electrode substrate of a secondary battery is adjusted based on a thickness of an insulation coated portion (76) formed on the electrode substrate.

4. The apparatus as claimed in any of the preceding claims, wherein the apparatus is configured such that the distance between the insulating slurry discharge portion (233) and an electrode substrate of a secondary battery is inversely proportional to a thickness of an insulation coated portion (76) formed on the electrode substrate.

5. The apparatus as claimed in any of the preceding claims, wherein the integrated slot die (200) comprises:
an upper plate (210) comprising a mixture slurry supply portion and an insulating slurry supply portion;
a lower plate (220) comprising a cavity (221) configured to collect a mixture slurry supplied to the mixture slurry supply portion; and
a spacer (230) positioned between the upper plate (210) and the lower plate (220) to form the mixture slurry discharge portion (222, 223) and the insulating slurry discharge portion (233).

6. The apparatus as claimed in claim 5, wherein the spacer (230) comprises a protrusion (231) that forms the insulating slurry discharge portion (233).

7. The apparatus as claimed in claim 6, wherein the protrusion (231) protrudes up to 80 µm from the mixture slurry discharge portion (222, 223).

8. The apparatus as claimed in claim 6, wherein the spacer (230) comprises a protrusion (231) amount change portion configured to adjust a distance the protrusion (231) protrudes from the mixture slurry discharge portion (222, 223).

9. A method of coating an electrode plate of a secondary battery, the method comprising:
simultaneously providing a mixture coating and an insulation coating to an electrode substrate of a secondary battery using a slot die having a mixture slurry discharge portion (222, 223) and an insulating slurry discharge portion (233),
wherein a distance from the insulating slurry discharge portion (233) to the electrode substrate is less than a distance from the mixture slurry discharge portion (222, 223) to the electrode substrate.

10. The method as claimed in claim 9, wherein the distance between the insulating slurry discharge portion (233) and the electrode substrate is based on (100) a thickness of an insulation coated portion (76) formed on the electrode substrate.

11. The method as claimed in claim 9 or 10, wherein the distance between the insulating slurry discharge portion (233) and the electrode substrate is inversely proportional to a thickness of an insulation coated portion (76) on the electrode substrate.

12. A slot die for coating an electrode plate of a secondary battery, the slot die comprising:
an upper plate (210) comprising a mixture slurry supply portion and an insulating slurry supply portion;
a lower plate (220) comprising a cavity (221) configured to collect a mixture slurry supplied to the mixture slurry supply portion; and
a spacer (230) positioned between the upper plate (210) and the lower plate (220) to form a mixture slurry discharge portion (222, 223) and an insulating slurry discharge portion (233),
wherein the slot die is configured such that a distance between the insulating slurry discharge portion (233) and an electrode substrate of a secondary battery is less than a distance between the mixture slurry discharge portion (222, 223) and the electrode substrate.

13. The slot die as claimed in claim 12, wherein the slot die is configured such that the distance between the insulating slurry discharge portion (233) and an electrode substrate of a secondary battery is changeable.

14. The slot die as claimed in claim 12 or 13, wherein the slot die is configured such that the distance between the insulating slurry discharge portion (233) and an electrode substrate of a secondary battery depends on a thickness of an insulation coated portion (76) formed on the electrode substrate.

15. The slot die as claimed in claim 12, wherein the spacer (230) comprises a protrusion (231) that forms the insulating slurry discharge portion (233).
